# EUROPÄISCHE PATENTSCHRIFT

(11) **EP 2 540 923 B1**
(45) Veröffentlichungstag und Bekanntmachung des Hinweises auf die Patenterteilung: **28.10.2015**
(21) Anmeldenummer: 12005133.9
(22) Anmeldetag: 20.06.2012
(51) Int. Cl.: E03F 5/04

(54) **Abwasserablauf mit Geruchsverschluss**
Waste-water drain with odour trap
Evacuation d'eau avec blocage d'odeur

(30) Priorität: 29.06.2011 DE 102011051430
(43) Veröffentlichungstag der Anmeldung: 02.01.2013
(73) Patentinhaber: wedi GmbH, 48282 Emsdetten (DE)
(72) Erfinder: Wedi, Stephan, 48282 Emsdetten (DE)
(74) Vertreter: Bischof, Oliver

(56) Entgegenhaltungen:
- EP-A1- 1 798 352
- DE-A1- 1 922 160
- DE-C- 842 779
- DE-U1- 20 101 787

## Beschreibung

Die Erfindung betrifft einen Abwasserablauf mit Geruchsverschluss nach dem Oberbegriff des Anspruches 1, der insbesondere für den Einbau in flache Duschwannen geeignet ist.

Abwasserabläufe mit Geruchsverschluss sind in zahlreichen Ausführungen bekannt. Werden solche Abwasserabläufe für flache Duschwannen eingesetzt, so kommt es auf eine entsprechend flache Bauweise der Abwasserabläufe an. Frei begehbare Duschwannen sollen einen möglichst gegen Null gehenden Überstand haben, so dass für den Einbau des Abwasserablaufs nur die Duschvertiefung bleibt.

Dem Stand der Technik ist beispielsweise eine Konstruktion eines Abwasserablaufs mit Geruchsverschluss zu entnehmen, die in der GB 2 298 661 A veröffentlicht ist. Hier wird an einem topfartigen Gehäuseteil, das teilweise als Überlaufwand verwendet wird, ein Geruchsverschluss geschaffen, der eine Wasserstandskammer innerhalb und außerhalb des Ablaufs aufweist. Nachteilig bei dieser Konstruktion ist, dass als Überlaufwand 34 von der ersten Kammer 22 in eine zweite Kammer 36 nur der dem Ablauf zugewandte Teil des topfartigen Gehäuseteiles genutzt werden kann, da die zweite Kammer 36 die erste Kammer 22 nicht vollständig umgibt. Um trotzdem eine akzeptable Ablaufleistung, die als Volumen des ablaufenden Wassers pro Zeiteinheit definiert ist, zu realisieren ist es erforderlich, den sich an die zweite Kammer 36 anschließenden Auslass 38 groß zu dimensionieren, wodurch die Bauhöhe des Gesamtsystems sich in unvorteilhafter Weise erhöht. Weiterhin würde bei der gewählten Konstruktion einer die erste Kammer nicht vollständig umschließenden zweiten Kammer ein flacherer Aufbau eine Reduktion der Höhe der Überlaufwand (34) bedingen, was eine optimale Geruchsverhinderung verhindert, insbesondere wenn der Wasserstand durch länger anhaltende Trockenheit abgefallen ist. Nachteilig ist auch, dass der in GB 2298661 A1 offenbarte Abwasserablauf auf Grund seiner Abmaße offensichtlich nicht zum Einbau in ein flaches Duschbodenelement geeignet ist.

DE 202008001013 U1 zeigt eine Ablaufarmatur insbesondere für Badewannen und Duschwannen, mit einem zentral gelegenen Wasserzulauf und einer um den zentralen Zulauf herum angeordneten Siphonanordnung. Ein eine Bodenablauföffnung 2 umgebender Randbereich 3 des Wannenbodens 1 ist konisch ausgebildet und steht gegenüber der Unterseite des Wannenbodens nach unten vor. Die Konizität des Wannenbodens wird genutzt, um eine Siphonanordnung so zu gestalten, um einen oberen Gehäusewandabschnitt 5.4 höher anzuordnen als eine Dichtung 14, welche unterhalb eines im Wesentlichen horizontal verlaufenden Abschnittes der Bodenablauföffnung 2 des Wannenbodens vorgesehen ist.

Zwischen dem Boden 5.2 und einem Überlaufrand 5.5 ist ein sich konisch nach oben erweiternder Gehäusewandabschnitt 5.6 vorgesehen, welcher fest in das Gehäuse integriert ist. Ein demontierbarer Bodeneinsatz zur Bildung einer bis an den Boden des Ablaufgehäuses reichenden Stauwand ist nicht vorgesehen und konstruktiv auch gar nicht möglich, weil der Durchmesser des Überlaufrandes 5.5 größer ist als die Bodenablauföffnung 2 des Wannenbodens,

DE 102008038274 B3 betrifft einen Wannenablauf mit einem Gehäuse 1, einer oberen Eintrittsöffnung 2, einem an der Eintrittsöffnung angeordneten Einströmkanal 3, einem Siphonkanal 7, einem Auslaufkanal 8 und einer in die äußere Seitenwand des Gehäuses angeordneten Austrittsöffnung 5. Durch die Eintrittsöffnung 2 eintretendes Wasser wird zunächst bis an die äußere Seitenwand 4 und dann wieder nach innen in den Auslaufkanal 8 geleitet. Unterhalb des Auslaufkanals 8 ist ein den Einlaufkanal 3 mit dem Siphonkanal 7 verbindender Kanalbereich vorgesehen, welcher die Gesamthöhe des Ablaufes in etwa um die in diesem Kanalbereich vorhandene Höhe heraufsetzt. Hierdurch resultiert eine Gesamthöhe des Ablaufes, welche die besonderen Anforderungen flacher Ablaufsysteme nur unzureichend erfüllt.

EP 1 798 352 A1 offenbart einen Abwasserablauf mit Geruchsverschluss umfassend ein Flachgehäuse 2, eine Abdeckung 6, einen mit der Abdeckung 6 verbundenen Einlassstutzen 12 und einen zylindrischen Bodeneinsatz 16. Hieraus ergibt sich ein eine Stauwand des Bodeneinsatzes umgebender Ablaufkanal, der in eine seitliche Auslauföffnung eines Auslaufstutzens mündet.

Dieses Dokument zeigt somit einen Abwasserablauf mit den Merkmalen des Oberbegriffs des unabhängigen Anspruchs.

DE 201 01 78 U1 betrifft einen Ablauf mit einem topfartigen Gehäuse mit einer oberen Eintrittsöffnung und einem seitlich an dem Gehäuse angeordneten Ablaufabschnitt. Im Gehäuse ist ein herausnehmbarer Einsatz zur Erzeugung einer siphonartigen Umlenkung vorgesehen.

DE 19 22 160 A1 betrifft einen Bodenablauf mit Wassersperre und mit einer diesen umgebenden, mit einem Auslaufstutzen versehenen Schale, die sich nach unten an einen zentralen Kessel unterhalb dessen oberer Schale anschließt. Über der Einlauföffnung ist ein kreisrunder Deckel angebracht, der mittig durch eine Säule abgestützt wird.

Die genannten Abflüsse weisen hohe Aufbauhöhen auf. Diese resultiert unter anderem auch aus der Verwendung von runden Abläufen bzw. Ablaufrohren, bei welchen die für die Ableitung des Wassers erforderliche Querschnittsfläche einen relativ großen Durchmesser bedingt. Die hohen Aufbauhöhen tragen andererseits dazu bei, den Durchmesser des Einlaufes und damit die für den jeweiligen Ablauf erforderliche Abdeckung einerseits klein und andererseits im Wesentlichen kreisrund gestalten zu können. Die bei Verwendung größerer Ablaufdurchmesser erforderlichen größeren Abdeckungen sind bei analoger Bauweise nicht geeignet, die erforderliche Tragfähigkeit auszubilden.

Es stellt sich daher die Aufgabe, einen Abwasserablauf mit Geruchsverschluss zu schaffen, der eine hohe Ablaufleistung bei niedriger Bauweise aufweist und gleichzeitig den Anforderungen hinsichtlich der GeruchsSperrwirkung gerecht wird.

Zudem soll eine stabile Unterstützung der Abdeckung im Bereich des Übergangs zwischen Ablaufstutzen und Flachgehäuse bereitgestellt werden.

Diese Aufgabe wird bei einem Abwasserablauf der eingangs genannten Art dadurch gelöst, dass im Flachgehäuse im Bereich eines Überganges zum Ablaufstutzen ein Stützelement vorgesehen ist, welches die Abdeckung abstützt.

Der Geruchsverschluss ist durch ein nach dem bekannten "Siphon-Prinzip" ausgebildetes Kammersystem realisiert. Eine innere, vorzugsweise runde, Einlasskammer ist durch den Einlassstutzen, welcher eine erste Stauwand darstellt, von einer Zwischenkammer abgetrennt. Die Zwischenkammer ist ebenfalls vorzugsweise rund und durch eine zweite Stauwand von einer äußeren Ablaufkammer getrennt, die gleichzeitig auch die Funktion eines Ablaufkanals hat, welcher das einströmende Fluid, in aller Regel Wasser, einem Ablaufstutzen zuführt. Dabei bildet der Bereich zwischen einer am Flachgehäuseboden befindlichen Mulde und der Unterkante der ersten Stauwand einen Unterlauf und der Bereich zwischen der zweiten Stauwand und der über dieser Stauwand befindlichen Unterseite des Einlassstutzens einen Überlauf aus. Unterlauf und Überlauf sind so konzipiert, dass im Betriebszustand ein Wasserpegel entsteht, der Ablaufkammer und Einlasskammer gasdicht von einander trennt. Die vorzugsweise kreisförmig ausgebildeten Stauwände sind wesentlich länger, als eine Überlaufwand, die lediglich durch einen Teilabschnitt, beispielsweise den dem Ablauf zugeordneten Teilabschnitt eines Bodeneinsatzes gebildet wird, wodurch ein höherer Volumenstrom begünstigt wird. Der Boden des Flachgehäuses weist in Richtung Ablaufstutzen eine Gefällekontur auf. Dieses Gefälle erweitert den Ablaufkanal kontinuierlich und fördert zudem das Ablaufen des Wassers in Richtung Ablaufstutzen, da Wasser auf Grund seiner physikalischen Eigenschaften grundsätzlich dem jeweils niedrigsten Punkt zustrebt.

Die Abdeckung umfasst einen Aufsatz, welcher eine Aufnahme für den Einlassstutzen und eine den Aufsatz umgebende Abdeckungsfläche aufweist. Der Abwasserablauf kann so insgesamt in einen einen Duschbereich ausbildenden Estrich integriert werden, wobei lediglich der Aufsatz den Estrich überragt. Auf den Estrich kann ggf. eine Sperrschicht aufgebracht werden, auf die wiederum in bekannter Weise ein Fliesenbelag aufgebracht wird. Die aufgebrachten Fliesen grenzen direkt an den vorzugsweise quadratisch ausgebildeten Aufsatz der Abdeckung an und bilden eine insgesamt höhengleiche Duschbodenkontur von Bodenbelag und Abwasserablauf aus. Die Aufnahme für den Bodeneinsatz ist so konzipiert, dass dieser fest im Flachgehäuse gehalten und trotzdem bei Bedarf, zum Beispiel für Reinigungsarbeiten, einfach demontierbar ist.

Weiterhin ist es günstig, wenn ein Adapterstück vorgesehen ist, welches mit einer Aufnahme mit dem Ablaufstutzen des Flachgehäuses verbunden ist. Das durch den Ablaufkanal des Flachgehäuses abfließende Wasser muss im Weiteren einem, in aller Regel aus normierten Rundrohren bestehendem, Ablaufsystem zugeführt werden. Mündet der Ablaufkanal direkt in ein solches Rundrohrsystem, so ergibt sich an der Übergangsstelle ein strömungstechnisch ungünstiger Engpass, der zu Stauungen und damit einer Reduktion der Ablaufleistung führt. Im Gegensatz dazu reduziert ein zwischen Ablaufkanal und Rundrohrsystem angeordnetes Adapterstück die Kontur des Kanals nicht übergangslos sondern kontinuierlich und verhindert damit die Ausbildung von Verwirblungen und Strömungsabrissen.

In einer bevorzugten Ausführung der Erfindung ragt aus der Mulde zentral ein Dom auf, welcher ein Stützelement für ein Abdeckgitter bildet. Während ein freitragend angebrachtes Abdeckgitter in seiner Mitte Lastspitzen aufnehmen müsste, die entweder die Festigkeit des Abdeckgitters reduzieren oder das Produkt verteuernde Verstärkungsmaßnahmen erfordern, kann ein mit einem solchen Stützelement, welches aus statischen und strömungstechnischen Gründen vorzugsweise konisch und rund ausgestaltet ist, versehenes Flachgehäuse die genannten Nachteile eines frei tragenden Systems kompensieren. Damit eröffnet sich die Möglichkeit, eine relativ große Einlasskammer für durch die Aussparungen des Abdeckgitters eindringendes Wasser bei relativ dünner Abdeckgitterstärke zu realisieren. Eine solche, relativ groß gestaltete, Einlasskammer wirkt sich günstig auf die Anforderungen hinsichtlich der zu realisierenden Ablaufleistung und Bauhöhe aus.

Besonders günstig ist es, wenn in Höhe der Unterkante des Einlassstutzens zwei Ringflächen gebildet werden, wobei
- die innere Ringfläche innen durch die Außenkontur des Domes und außen durch die Innenkontur des Einlassstutzens begrenzt ist,
- die äußere Ringfläche innen durch die Außenkontur des Einlassstutzens und außen durch die Innenkontur des Bodeneinsatzes begrenzt ist,
und die Größe der inneren Ringfläche ca. 50% bis 65% der Größe der äußeren Ringfläche beträgt.

Soweit es sich um Flachgehäuse ohne zentralen Dom handelt, ergibt sich an Stelle der inneren Ringfläche eine innere Kreisfläche. Wesentlich ist, dass die innere Kreis- oder Kreisringfläche ca. 50% bis 65%, vorzugsweise ca. 59% der Größe einer äußeren Ringfläche, welche im Wesentlichen durch die Oberfläche der Zwischenkammer gebildet wird, beträgt, wobei die Oberflächen der beiden Flächen in Höhe der Unterkante des Einlasskammer und Zwischenkammer trennenden Einlassstutzens zu ermitteln ist. Durch ein so ausgestaltetes Größenverhältnis ergeben sich überraschend günstige Strömungsverhältnisse welche es ermöglichen, die zumindest teilweise miteinander konkurrierenden Ziele des Abwasserablaufes, einer insgesamt niedrigen Bauweise bei gleichzeitig hoher Ablaufleistung und guter Geruchssperrwirkung zu optimieren, wobei das Optimum darin gesehen wird, dass die Anforderungen der Norm DIN EN 274-1:2002,4.6, welche unter anderem in der Gewährleistung einer Ablaufleistung von mindestens 0,4 Liter/Sekunde bei einer Anstauhöhe von 15mm besteht, erfüllt werden.

In diesem Zusammenhang erweist es sich weiterhin als Günstig, wenn der vertikale Abstand zwischen der Oberkante des Bodeneinsatzes und der Unterkante des Einlassstutzens weniger als 40mm beträgt. Ein größerer Abstand verbessert zwar die Geruchssperrwirkung, reduziert jedoch bei im Übrigen konstanter Gesamtbauhöhe des Ablauftopfes den für die Ausbildung eines Übergangs zwischen Einlasskammer und Zwischenkammer bzw. Zwischenkammer und Ablaufkanal zur Verfügung stehenden Raum hinsichtlich seiner Durchgangshöhe. Dabei ist die Durchgangshöhe zu verstehen als der vertikale Abstand zwischen der Kante eines eine Stauwand bildenden Einlassstutzens sowie dem Boden des Flachgehäuses bzw. zwischen der Kante eines eine Stauwand bildenden Bodeneinsatzes und der oberen Begrenzung, welche durch die Unterseite des Einlassstutzens gebildet wird. Ein kleinerer Abstand führt zu einer Verringerung der Geruchssperrwirkung bis hin zu einem Unterschreiten der in der Norm DIN EN 1253-2: 2002, 5.2, festgelegten Anforderungen.

Weiterhin ist es vorteilhaft, wenn der Mittelpunkt des rohrförmigen Bodeneinsatz entgegen der Seite, an welcher der Ablaufstutzen angebracht ist, versetzt angeordnet ist, so dass der Ablaufkanal sich ausgehend von einer dem Ablaufstutzen gegenüberliegenden Stelle in Richtung Ablaufstutzen kontinuierlich erweitert. Hintergrund ist, dass der abfließende Wasserstrom zunächst gleichmäßig von allen Seiten in die kreisförmige Einlasskammer einströmt, dann in eine kreisringförmige Zwischenkammer gelangt und anschließend in den Ablaufkanal eintritt. Das die kreisförmige Stauwand des Bodeneinsatzes überströmende Wasser muss einseitig dem Ablauftopf zugeführt werden. Dies hat zur Folge, dass dasjenige Wasser, welches die Stauwand an der dem Ablaufstutzen entgegen gesetzten Seite überflutet, in den Wasserstrom des die Stauwand im Bereich Richtung Ablaufstutzen überflutenden Wasser aufgeht. Die Menge des Richtung Ablaufstutzen abzuführenden Wassers nimmt so, ausgehend von der dem Ablaufstutzen gegenüber liegende Stelle, die eine Art Wasserscheide bildet, von der aus das abfließende Wasser einerseits im Uhrzeigersinn und andererseits entgegen dem Uhrzeigersinn, in Richtung Ablaufstutzen fließt, kontinuierlich zu. Diese kontinuierlich zunehmende Wassermenge wird durch den sich Richtung Ablauftopf konisch erweiternden Ablaufkanal aufgenommen.

Weiterhin ist es günstig, wenn das Flachgehäuse einen Ablaufstutzen mit unterschiedlicher horizontale und vertikale Öffnungsweite aufweist und die horizontale Öffnungsweite größer ist als die vertikale Öffnungsweite. Dies hängt damit zusammen, dass das ablaufende Wasser über den Ablaufstutzen letztlich einem runden Rohr zugeführt wird, welches in aller Regel einen Außendurchmesser von 40mm aufweist. Um das aus dem Ablaufkanal in den Ablaufstutzen einfließende Wasser in strömungstechnisch günstiger Weise umzulenken, sind sprungartige Übergänge zu vermeiden, da diese zu Verwirbelungen und Stauungen führen. Optimal wäre somit ein insgesamt konischer Ablauf. Da jedoch auf Grund der gewünschten niedrigen Gesamtbauhöhe die Ausbildung eines solchen Zulaufes, nicht möglich ist, ist es vorteilhaft, wenn die horizontale Öffnungsweite größer ist als die vertikale Öffnungsweite und sich so ein insgesamt trichterförmiger Ablaufstutzen ergibt.

Die Gesamtstabilität des mit dem Flachgehäuse verbundenen Adapterstückes erhöht sich, wenn beide Bauteile unlösbar miteinander verbunden sind. Eine solche Verbindung kann beispielsweise durch die Ausbildung von Rastelementen durch Verschweißen und/oder durch ein Verkleben der Bauteile miteinander erreicht werden.

Um den mit unterschiedlichen Öffnungsweiten versehenen Ablaufstutzen an ein genormtes Rohrsystem anbinden zu können, ist es günstig, wenn sich der innerhalb des Adapterstückes befindliche Kanal von der Aufnahme in Richtung Austrittstutzen verjüngt und in ein rundes Rohr übergeht.

In einer vorteilhaften Ausgestaltung der Erfindung ist im Flachgehäuse im Bereich des Überganges zum Ablaufstutzen ein Stützelement vorgesehen, welches die Abdeckung abstützt. Hierdurch ist es möglich, die Abdeckung dünn zu gestalten, damit die Bauhöhe zu reduzieren und gleichzeitig die erforderliche Festigkeit zu realisieren

In einer weiteren vorteilhaften Ausgestaltung der Erfindung ist ein Höhenausgleichselement vorgesehnen, welches mit dem Aufsatz der Abdeckung verbindbar ist. Der erfindungsgemäße Abwasserablauf wird im Bereich der Abdeckungsfläche der Abdeckung in aller Regel mit einem Belag aus Fliesen versehen, wobei die Fliesen direkt an den Aufsatz dir Abdeckung angrenzen und die Oberkante des Aufsatzes höhengleich mit der Höhe der die Fliesen verbindenden Ausfugungen verbunden ist. Die verwendeten Bodenfliesen weisen jedoch je nach Art eine unterschiedliche Dicke auf, wobei im Bereich eines Duschbodens in aller Regel Fliesen mit einer Dicke von 3mm, 8mm und 10mm Verwendung finden. Um den Wasserablauf auch für unterschiedliche Fliesen als Grundelement einheitlich zu gestalten, empfiehlt es sich, die Höhe der Abdeckung so zu gestalten, dass sie für die standardmäßig niedrigste Fliesenhöhe geeignet ist. Die Anpassung an andere Fliesendicken wird realisiert durch die Möglichkeit, in die standardmäßige Abdeckung ein Höhenausgleichselement aufzunehmen, welches die zusätzliche, durch die Verwendung dickerer Bodenfliesen bedingte Differenz, ausgleicht.

Alle Teile des Abwasserablaufes, vorzugsweise bis auf das Sieb, können aus wärmebeständigem, hochfestem Kunststoff im Spritzgussverfahren hergestellt werden, wobei sich gleichzeitig eine gute Verarbeitbarkeit und Anpassbarkeit ergibt. Der beschriebene Abwasserablauf mit Geruchsverschluss kann, soweit im normalen Betrieb erforderlich, auseinander genommen und gereinigt werden und in einfacher Weise wieder zusammengesetzt werden.

Ein Ausführungsbeispiel der Erfindung ist aus der Zeichnung ersichtlich. Es zeigen:
- Fig. 1: einen Abwasserablauf in perspektivischer Darstellung im demontiertem Zustand,
- Fig. 2: das Flachgehäuse in perspektivischer Ansicht,
- Fig. 3: die Abdeckung in perspektivischer Ansicht,
- Fig. 4: das Adapterstück in perspektivischer Ansicht,
- Fig. 5: die Seitenansicht des Abwasserablaufes aus Fig. 1,
- Fig. 6: die Draufsicht auf den Abwasserablauf aus Fig. 1,
- Fig. 7: ein Duschbodenelement mit integriertem Abwasserablauf,
- Fig. 8: das Duschbodenelement aus Fig. 7 in einer Draufsicht,
- Fig. 9: das Duschbodenelement aus Fig. 8 in einer Seitenansicht (Schnittdarstellung),
- Fig. 10: ein vergrößertes Detail der Schnittdarstellung aus Fig. 9.

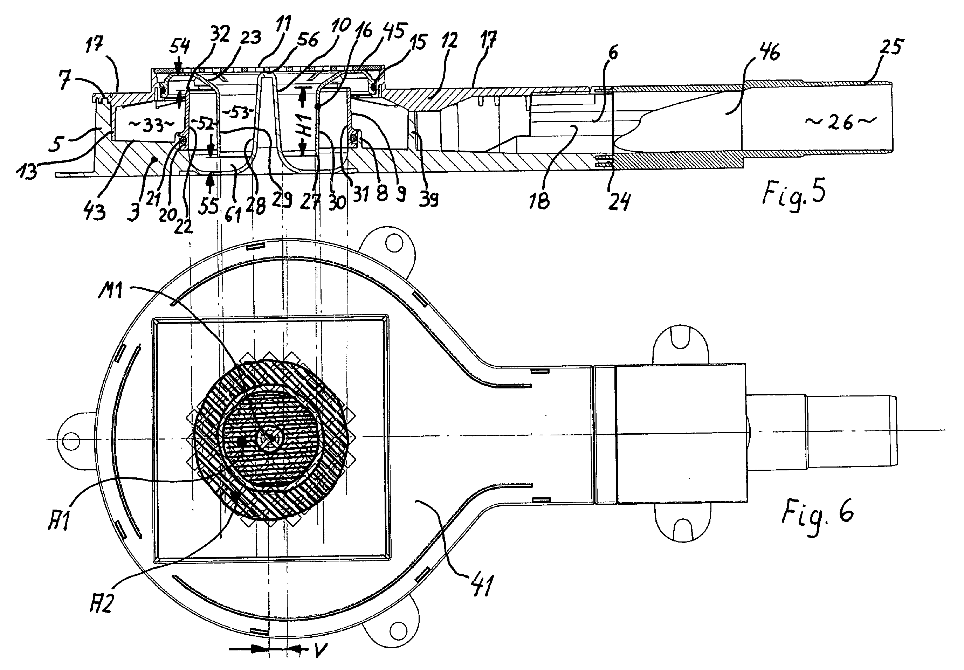

Die Figuren zeigen einen Abwasserablauf 1 in Draufsicht und im Schnitt, umfassend ein Flachgehäuse 3, eine Abdeckung 12, einen innerhalb der Abdeckung 12 eingebrachten Einlassstutzen 16 und ein Adapterstück 46. Die Abdeckung 12 öffnet sich nach oben mit einem quadratischen Aufsatz 14. In Fig. 5 dargestellt ist ein auf der Abdeckung 12 anzubringendes Abdeckgitter 11.

Weiterhin umfasst der Abwasserablauf einen Bodeneinsatz 9, der auf Grund seiner Position im Inneren des Gehäuses nur in Figur 5 zu sehen ist. Weiterhin dargestellt ist ein Höhenausgleichselement 47, mit welchem die Höhe des Aufsatzes 14 ggf. an unterschiedliche Bodenbeläge, insbesondere unterschiedlich dick ausgebildete Bodenfliesen, angepasst werden kann.

Der Einlassstutzen 16 ist an seiner Oberseite mit einer kreisringförmigen, abgeflachten Fläche 45 versehen, welche die Auflagefläche für das Abdeckungsgitter 11 bildet. Der Kreisring wird unterbrochen von Nuten 50, welche im Ablaufkanal 51 zusammenlaufendes Wasser in das Innere des Einlassstutzens 16 leiten, welcher über einen rohrförmigen Auslauf (49) verfügt.

Das Flachgehäuse 3 ist mit der Abdeckung 12 sowie dem Adapterstück 46 verbunden. Die Verbindung wird hergestellt durch Verrasterungselemente. Nicht ausgeschlossen sei, dass zusätzlich oder an Stelle der Verrasterungselemente ein geeigneter Kleber aufgebracht wird. Die Bauteile 3, 12 und 46 sind an ihren Verbindungsstellen durch geeignete Dichtungen, Verschweißungen und/oder dicht ausgeführte Klebestellen wasserdicht miteinander verbunden. Der Adapter 46 umfasst einen runden Austrittsstutzen 25, der so dimensioniert ist, dass er mit im Sanitärbereich üblichen, hier nicht näher dargestellten, Rohren verbunden werden kann, welche üblicherweise genormte Abmaße aufweisen.

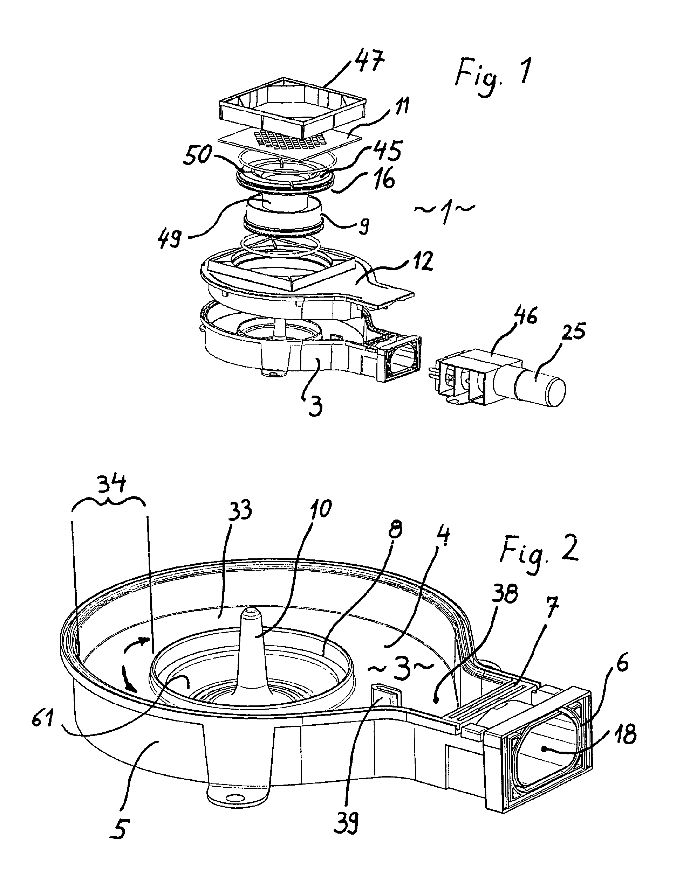

Figur 2 zeigt das Flachgehäuse 3, in dessen am Boden 4 angebrachter Aufnahme 8 ein nach oben und unten offener Bodeneinsatz 9 (dargestellt in Fig. 5) einsetzbar ist. Ergänzend hierzu ist in Figur 6 ersichtlich, dass der Mittelpunkt M1 der wannenartigen Aufnahme 8 um einen Versatz V entgegengesetzt zu einer Auslauföffnung 18 eines Ablaufstutens 6 des Flachgehäuses 3 versetzt angeordnet. Hierdurch ergibt sich im Ablaufkanal 33 eine engste Stelle 34, von der aus sich der Ablaufkanal 33 Richtung Ablaufstutzen 6 kontinuierlich erweitert. Diese Erweiterung wird unterstützt durch die Gefällekontur 43 des Ablaufkanals 33, welche zudem das Abfließen des Wassers Richtung Ablaufstutzen 6 forciert und ein vollständiges Abfließen von in den Ablaufkanal 33 eingeströmtem Wasser gewährleistet.

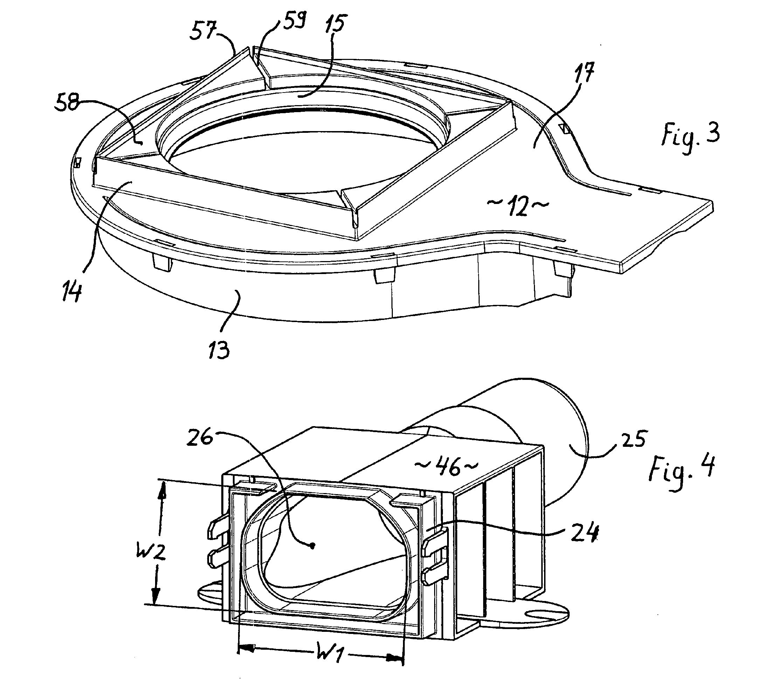

Die Gehäuseseitenwand 5 der Abdeckungsseite 7 und ein im Bereich des Übergangs 38 angebrachtes Stützelement 39 tragen die in Fig. 3 dargestellte Abdeckung 12. Es soll aber nicht ausgeschlossen sein, dass auf ein Stützelement verzichtet wird oder dass nicht nur ein, sondern mehrere Stützelemente in das Flachgehäuse 3 integriert sind.

Die Figuren 1 und 3 zeigen die Abdeckung 12, welche nach oben hin eine Abdeckungsfläche 17 und einen Aufsatz 14 aufweisen. Der Aufsatz 14 stellt eine quadratische Begrenzung für einen Fliesenbelag (nicht dargestellt) dar, der in aller Regel nach Einbau des Abwasserablaufes 1 in ein Duschbodenelement auf dessen Oberseite aufgebracht wird. Der Aufsatz 14 umfasst einen äußere Kantensteg 57 sowie Tragflächen 58 zur Aufnahme und Abstützung des Abdeckgitters 11. Die Tragflächen 58 sind vorzugsweise höhengleich mit der Fläche 45 und der abgeflachten Spitze 56 eines Doms 10, dessen Funktion später erklärt wird. Der Kantensteg 57 ist unterbrochen durch vorzugsweise in seinen Ecken angeordnete Aussparungen 59, welche kleinste Wassermengen dem Abfluss zuführen können. Bei diesen kleinsten Wassermengen handelt es sich zum Beispiel um durch Rissbildung im den die Oberseite 40 des Duschbodenelementes bedeckenden Fliesenbelag oder um durch Kapillarwirkung durch die zwischen den Fliesen vorhandenen Nuten in den Bereich zwischen Fliesenbelag und Duschbodenelement-Beschichtung eindringende Feuchtigkeit.

Ein Flansch 15 dient zur Verbindung der Abdeckung 12 mit dem Einlassstutzen 16.

Die Figuren 1 und 4 zeigen das Adapterstück 46, in dessen Aufnahme 24 der Ablaufstutzen 6 des Flachgehäuses 3 aufgenommen werden kann. Der Ablaufstutzen 6 und das entsprechende Gegenstück der Aufnahme 24 sind so ausgebildet, dass die horizontale Öffnungsweite W1 eines Kanals 26 größer ausgebildet ist als die vertikale Öffnungsweite W2. Das Adapterstück 46 überführt die Kontur des Ablaufstutzens 6 in strömungstechnisch günstiger Weise in den Kanal 26 mit einer kreisrunden Form, welche im runden Austrittsstutzen 25 des Adapterstückes 46 endet. Zur Verstärkung des Strömungskanals ist ein Teil des Adaptergehäuses 46 mit einer quaderartigen Schachtel umgeben.

Fig. 5 zeigt die Schnittdarstellung eines erfindungsgemäßen Ablaufes umfassend die Bauteile Flachgehäuse 3, Bodeneinsatz 9, Abdeckgitter 11, Abdeckung 12, Einlassstutzen 16 und Adapterstück 46.

Im unteren Bereich des Bodeneinsatzes 9 befindet sich eine außen liegende Nut 20 angebracht ist, die ein Dichtungselement 21 aufnimmt. Das Dichtungselement 21 sorgt für eine feste Verbindung zwischen Flachgehäuse 3 und Bodeneinsatz 9. Der äußere Durchmesser des Bodeneinsatzes 9 ist kleiner als der Durchmesser der Aufnahme 15 der Abdeckung 12, so dass, beispielsweise zu Reinigungszwecken, auch im fertig montierten Zustand der Bodeneinsatz 9 bedarfsweise aus dem Abwasserablauf entfernt werden kann.

In weitgehend analoger Weise ist der Einlassstutzen 16 mit der Aufnahme 15 der Abdeckung 12 verbunden und kann ggf. demontiert werden.

Im Zentrum des Einlassstutzens 16 befindet sich im montierten Zustand des Abwasserablaufes der Dom 10, welcher ausgehend von der Mulde 61 des Flachgehäuses 3 sich konisch verdünnend aufsteigt und eine abgeflachte Spitze 56 aufweist, die vorzugsweise höhengleich mit der Fläche 45 angeordnet ist und als weitere Stütze für das Abdeckgitter 11 fungiert.

Einlassstutzen 16 und Abdeckung 12 sind im Bereich des Flansches 15 in Form einer Steckverbindung miteinander verbunden, wobei zwischen den beiden Bauteilen ein Abdichtelement vorgesehen ist, bei dem es sich vorzugsweise um ein in einer äußeren Nut des Einlassstutzens 16 angeordneten Dichtelement handelt.

Bei bestimmungsgemäßer Verwendung des Abwasserablaufes strömt Wasser durch das Abdeckgitter 11 in eine den Dom 10 umgebende, ringförmige Einlasskammer 53. Die Einlasskammer 53 wird nach unten hin begrenzt durch die Unterkante 27 des Einlassstutzens 16, wobei die Innenkontur 29 eine erste Stauwand ausbildet. Zwischen der Unterkante 27 und dem Boden der Mulde 61 ist ein ringförmiger Durchgang ausgebildet, welcher eine Durchgangshöhe 55 von weniger als 10 mm, vorzugsweise 8 mm ±0,5mm aufweist, durch den das in die Einlasskammer 53 eingeströmte Wasser in eine Zwischenkammer 52 weitergeleitet wird. Die Zwischenkammer 52 wird nach innen durch die Außenkontur 30 des Einlassstutzens 16 und nach außen durch die Innenkontur 31 des Bodeneinsatzes 9, der eine zweite Stauwand 22 ausbildet, begrenzt.

Über die ringförmige Oberkante 32 der zweiten Stauwand 22 wird einfließendes Wasser durch einen nach oben von der Unterseite des Einlassstutzen 16 begrenzten zweiten Durchlass, welcher eine Durchgangshöhe 54 von weniger als 10 mm, vorzugsweise 8 mm ± 0,5mm aufweist, in den Ablaufkanal 33 weitergeleitet. Die Durchgangshöhen 54 und 55 sind vorzugsweise gleich groß. Der vertikale Abstand H1 zwischen der Oberkante 32 des Bodeneinsatzes 9 und der Unterkante 27 des Einlassstutzens 16 beträgt weniger als 40mm, vorzugsweise 38mm ± 0,5mm.

Die zwischen Einlasskammer 53 und Zwischenkammer 52 sowie zwischen Zwischenkammer 52 und Ablaufkanal 33 ausgebildeten Stauwände sind so ausgelegt, dass eine grundsätzlich bekannte Geruchssperre ausgebildet wird.

Wesentlich ist, dass die Größe einer Ringfläche A1 der Einlasskammer ca. 50% bis 65%, vorzugsweise ca. 59%, der Größe einer Ringfläche A2 der Zwischenkammer, jeweils gemessen in Höhe der Unterkante 27, beträgt.

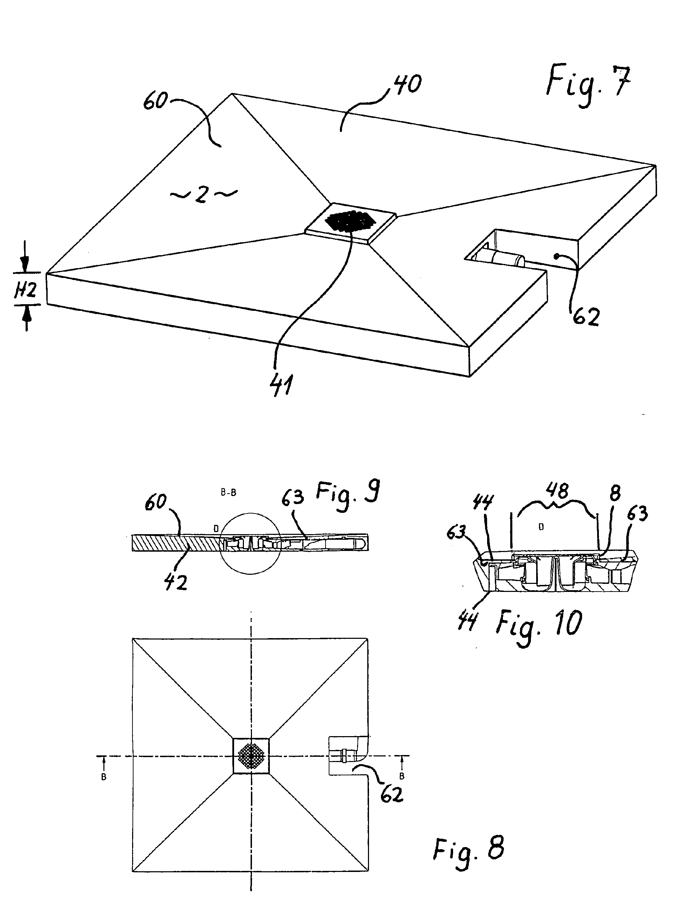

Fig. 7 zeigt ein Duschbodenelement 2, in welches ein Abwasserablauf 1 integriert ist, von dem der Bereich des Ablauftopfes 40 zu sehen ist. Die Gesamthöhe H2 dieses Duschbodenelementes beträgt weniger als 70 mm, vorzugsweise ca. 65 mm. Die Oberseite 40 weist eine dem Ablauftopf 41 zugerichtete Gefällekontur 60 auf.

Die Figuren 8, 9 und 10 zeigen das Duschbodenelement 2 aus Fig. 7 in einer Draufsicht sowie in als Schnitt dargestellten Seitenansichten. Das Duschbodenelement 2 umfasst eine vorzugsweise aus einem Kunststoffschaum bestehende Grundplatte 42, welche zunächst an einer Seite mit einer Aussparung 62 versehen wird. Daran anschließend wird an eine Grundflächenseite der Grundplatte 42 die Gefällekontur 60 eingebracht, wobei vorzugsweise ein Fräswerkzeug verwendet wird. Die die Gefällekontur 60 beinhaltende Seite stellt die Oberseite 40 dar. Die Oberseite 40 wird mit einer Beschichtung 44 versehen, welche vorzugsweise aus einem Mörtel besteht und eine wassersperrende Wirkung aufweist. Es soll nicht ausgeschlossen sein, dass auch die Unterseite der Grundplatte 42 mit einer Beschichtung 44 versehen wird. Nach Aushärten der Beschichtung 44 wird in die Grundplatte eine Durchdringung 48 eingebracht, welche kompatibel zur Aufnahme 8 der Abdeckung 12 des Abwasserablaufes 1 ist und diese passgenau aufnimmt. Daran anschließend wird die Kontur des Abwasserablaufes 1 in die Unterseite der beschichteten Grundplatte vorzugsweise mit einem Fräswerkzeug eingebracht, so dass die Durchdringung 48 mit der Aussparung 62 durch einen Kanal verbunden ist. Zwischen dem den Abwasserablauf aufnehmenden Kanal und der Oberseite 40 des Duschbodenelementes verbleibt ein um die Dicke des Abwasserablaufes reduzierter Bereich 63 der Grundplatte 40, welcher als Anschlagfläche für den zu integrierenden Abwasserablauf 1 fungiert. In analoger Weise verbleibt nach Einfräsen der Kontur im Bereich der Abdeckungsfläche 17 der Abdeckung 12 ebenfalls ein reduzierter Bereich 63, in dem die Grundplatte 40 lediglich eine Restdicke aufweist. Mit den so entstandenen Anschlagflächen der Grundplatte 42 wird die Abdeckungsfläche 17, die obere Fläche des Adapterstückes 46 sowie ggf vorhandene weitere Rohrelemente verbunden, wobei als Verbindung vorzugsweise eine dauerfeste Kleb- und Dichtverbindung hergestellt wird. Es ist ersichtlich, dass die Unterseite des Abwasserablaufes mit der Unterseite des Duschbodenelementes höhengleich verbunden ist, so dass sich für das Duschbodenelement mit integriertem Abwasserablauf eine einheitliche Aufstandsfläche ergibt.

Im Ergebnis stellt das Duschbodenelement 2 ein montagefertiges Einbauteil mit standardisiertem Wasserablauf dar, welches an einer Baustelle von einem Monteur an einem dafür vorgesehenen Duschplatz eingebaut werden kann. Der Abwasserablauf dieses Duschbodenelementes 2 kann bedarfsweise mit weiteren, in aller Regel normierten, Bauteilen eines Rohrsystems verbunden und durch anschließenden Auftrag eines Fliesenbelages zu einem Duschplatz ausgebaut werden, welcher bezogen auf den das Duschbodenelement umgebenden Bereich höhengleich und barrierefrei ausgestaltet ist.

**Bezugszeichenliste**

| | | | |
|---|---|---|---|
| 1 | Abwasserablauf | 41 | Ablauftopf |
| 2 | Duschbodenelement | 42 | Grundplatte |
| 3 | Flachgehäuse | 43 | Gefällekontur _{(des Kanals)} |
| 4 | Boden | 44 | Beschichtung |
| 5 | Gehäuseseitenwand | 45 | Fläche |
| 6 | Ablaufstutzen _{(des Flachgehäuses)} | 46 | Abdapterstück |
| 7 | Abdeckungsseite | 47 | Höhenausgleichselement |
| 8 | Aufnahme | 48 | Durchdringung |
| 9 | Bodeneinsatz | 49 | Auslauf |
| 10 | Dom | 50 | Nut |
| 11 | Abdeckgitter | 51 | Ablaufkanal |
| 12 | Abdeckung | 52 | Zwischenkammer |
| 13 | Abdecku ngsseitenwand | 53 | Einlasskammer |
| 14 | Aufsatz | 54 | Durchgangshöhe 1 |
| 15 | Flansch | 55 | Durchgangshöhe 2 |
| 16 | Einlassstutzen | 56 | Spitze _{(des Doms)} |
| 17 | Abdeckungsfläche | 57 | Kantensteg |
| 18 | Auslauföffnung | 58 | Tragfläche |
| | | 59 | Aussparungen |
| 20 | Nut | 60 | Gefälle _{(des Duschbodenelementes)} |
| 21 | Dichtungselement | 61 | Mulde |
| 22 | Stauwand | 62 | Aussparung |
| 23 | Gefällekragen | 63 | Bereich |
| 24 | Aufnahme | | |
| 25 | Austrittsstutzen _{(des Adapters)} | | |
| 26 | Kanal | | |
| 27 | Unterkante | | |
| 28 | Außenkontur _{(des Doms)} | | |
| 29 | Innenkontur _{(des Einlassstutzens)} | | |
| 30 | Außenkontur _{(des Einlassstutzens)} | V | Versatz |
| 31 | Innenkontur _{(des Bodeneinsatzes)} | H1 | Abstand |
| 32 | Oberkante _{(der Stauwand)} | H2 | Gesamthöhe |
| 33 | Ablaufkanal | W1 | Öffnungsweite |
| 34 | Engste Stelle | W2 | Öffnungsweite |
| | | A1 | Ringfläche |
| | | A2 | Ringfläche |
| 38 | Ubergang | M1 | Mittelpunkt |
| 39 | Stützelement | B-B | Schnitt |
| 40 | Oberseite | D | Ausschnitt |

## Patentansprüche

1. Abwasserablauf (1) mit Geruchsverschluss, umfassend:
- ein Flachgehäuse (3) mit einem Boden (4), einem Ablaufstutzen (6), welcher eine seitliche Auslauföffnung (18) ausbildet, sowie mit einer bis auf die seitliche Auslauföffnung (18) geschlossenen Gehäuseseitenwand (5) und einer nach oben offenen, dem Boden (4) gegenüberliegenden Abdeckungsseite (7),
- eine mit dem Flachgehäuse (3) verbindbare Abdeckung (12) mit einer Abdeckungsseitenwand (13), welche im montierten Zustand in das Flachgehäuse (3) hineinragt,
- einen mit der Abdeckung (12) verbundenen Einlassstutzen (16), der mit einem nach unten ragenden, rohrförmigen Auslauf (49) oberhalb einer in den Boden (4) eingelassenen Mulde (61) endet und von einer Geruchsverschlussanordnung umgeben ist,
- wobei ein zylindrischer Bodeneinsatz (9) in eine den Rand der Mulde (61) bildenden Aufnahme (8) gesetzt ist, mit dem Flachgehäuse (3) abgedichtet verbunden ist und unterhalb der Abdeckungsseite endet und eine Stauwand (22) bildet und
- sich ein die Stauwand (22) des Bodeneinsatzes (9) umgebender Ablaufkanal (33) ergibt, der in die seitliche Auslauföffnung des Ablaufstutzen (6) mündet und eine zu letzterem geneigte Gefällekontur (43) aufweist,
**dadurch gekennzeichnet, dass**
im Flachgehäuse (3) im Bereich eines Überganges (38) zum Ablaufstutzen (6) ein Stützelement (39) vorgesehen ist, welches die Abdeckung (12) abstützt.

2. Abwasserablauf nach Anspruch 1, **dadurch gekennzeichnet, dass** aus der Mulde (61) zentral ein Dom (10) aufragt, welcher ein Stützelement für ein Abdeckgitter (11) bildet.

3. Abwasserablauf nach Anspruch 2, **dadurch gekennzeichnet, dass** der aus der Mulde (61) aufragende Dom (10) eine von der Mulde (61) des Flachgehäuses (3) sich konisch verjüngende Kontur aufweist, so dass durch die Abdeckung (12) in eine den Dom (10) ringförmig umgebende Einlasskammer (53) einströmendes Wasser widerstandsarm in eine Zwischenkammer (52), welche nach innen durch eine Außenkontur (30) des Einlassstutzens (16) und nach außen durch eine Innenkontur (31) des Bodeneinsatzes (9), der die zweite Stauwand (22) ausbildet, begrenzt, überführt wird.

## Claims

1. Wastewater drain (1) having an odour trap, comprising:
- a shallow housing (3) having a base (4), a drainage connector (6) which forms a lateral discharge opening (18), and having a housing side wall (5) which is closed with the exception of the lateral discharge opening (18), and a cover side (7) which is open at the top and located opposite the base (4),
- a cover (12) which can be connected to the shallow housing (3) and has a cover side wall (13) which in the installed state protrudes into the shallow housing (3),
- an inlet connector (16), which is connected to the cover (12) and ends with a downwardly protruding, tubular discharge (49) above a depression (61) which is introduced in the base (4), said inlet connector being surrounded by an odour trap assembly,
- wherein a cylindrical base insert (9) is placed into a receptacle (8) forming the edge of the depression (61), is connected in a sealed manner to the shallow housing (3), ends beneath the cover side and forms a retaining wall (22), and
- a drainage channel (33) is formed which surrounds the retaining wall (22) of the base insert (9) and issues into the lateral discharge opening of the drainage connector (6) and has a gradient contour (43) which is inclined toward this connector,
**characterised in that**
a support element (39) is provided in the shallow housing (3) in the region of a transition (38) to the drainage connector (6), said support element supporting the cover (12).

2. Wastewater drain as claimed in claim 1, **characterised in that** a dome (10) which forms a support element for a cover grate (11) projects upwards centrally from the depression (61).

3. Wastewater drain as claimed in claim 2, **characterised in that** the dome (10) projecting upwards from the depression (61) has a contour which tapers conically from the depression (61) of the shallow housing (3), so that water flowing into an inlet chamber (53), surrounding the dome (10) in an annular manner, through the cover (12) is transferred with low resistance into an intermediate chamber (52) which is delimited on the inside by an outer contour (30) of the inlet connector (16) and is delimited on the outside by an inner contour (31) of the base insert (9) which forms the second retaining wall (22).

## Revendications

1. Ecoulement d'eau usée (1) avec blocage d'odeur, comprenant:
- un logement plat (3) avec un fond (4), un raccord de sortie (6) formant une ouverture d'écoulement latérale (18), de même qu'une paroi latérale de logement fermée (5) jusqu'à l'ouverture d'écoulement latérale (18) et un côté recouvrement (7) opposé au fond (4), ouvert vers le haut,
- un couvercle (12) pouvant être relié au logement plat (3) avec une paroi latérale de recouvrement (13) pénétrant une fois montée dans le logement plat (3),
- un raccord d'admission (16) relié au couvercle (12), qui se termine par un écoulement tubulaire (49) pénétrant vers le bas, au-dessus d'un creux (61) pratiqué dans le fond (4) et qui est entouré par un système de blocage d'odeur,
- où une plaque de fond cylindrique (9) est posée dans un réceptacle (8) formant le bord du creux (61), relié de façon étanche avec le logement plat (3), se terminant au-dessous du côté couvercle et constituant une paroi de retenue (22) et
- l'on trouve un canal de sortie (33) entourant la paroi de retenue (22) de la plaque de fond (9) canal émergeant dans l'ouverture d'écoulement du raccord de sortie (6) et présentant un contour de pente incliné notamment,
**caractérisé en ce**
**qu'**un élément d'appui (39) est prévu dans le logement plat (3) dans la zone de transition (38) avec le raccord de sortie (6), élément supportant le couvercle (12).

2. Ecoulement d'eau usée selon la revendication 1, **caractérisé en ce qu'**un dôme émerge (10) centralement du creux (61), dôme constituant un élément d'appui pour grille de couvercle (11).

3. Ecoulement d'eau usée selon la revendication 2, **caractérisé en ce que** le dôme (10) émergeant du creux (61) présente un contour allant rétrécissant de façon conique à partir du creux (61) du logement plat (3), de sorte que l'eau s'écoulant à travers le couvercle (12) dans une chambre d'admission (53) entourant de manière annulaire le dôme (10) est transférée sans grande résistance dans une chambre intermédiaire (52) limitée vers l'intérieur par un contour externe (30) du raccord d'admission (16) et vers l'extérieur par un contour interne (31) de la plaque de fond (9) qui constitue la seconde paroi de retenue (22).
